# EUROPEAN PATENT APPLICATION

(11) **EP 1 077 427 A2**
(43) Date of publication of application: **21.02.2001**
(21) Application number: 00305620.7
(22) Date of filing: 04.07.2000
(51) Int. Cl.: G06K 7/00

(54) **Digital data storage apparatus**

(30) Priority: 19.08.1999 GB 9919706
(71) Applicant: NCR International, Inc., Dayton, Ohio 45479 (US)
(72) Inventor: Mackay, Robin, London E1 9WB (GB); Papadopoulos, Despina, New York, NY 10012 (GB)
(74) Representative: Cleary, Fidelma

(57) **Abstract**

Digital data storage apparatus (10) comprises attachment means (18) to removably attach the apparatus directly to the human body, storage means (34, 36) for storing data, and communication means (14, 16) for transferring data into and out of the apparatus (10). The apparatus is characterised in that the storage means (34, 36) comprises one or more of ports (34) each for connection to a discrete storage module (36) removably attachable to the apparatus and in that the communication means includes contact means separate from the ports and the storage means, the contact means being adapted to transfer data by physical contact with the apparatus. The user may then customise the apparatus (10) according to need by fitting memory devices (36) whose stored data embodies the functions deemed relevant by the user.

## Description

The present invention relates to a digital data storage apparatus that further includes communication means for transferring digital data into and out of the apparatus. The apparatus may, for example, constitute a portable means for storing electronic funds (e-cash), advantageously combined in a multifunctional manner with mobile communications and entertainment facilities. The device is preferably wearable, for example taking the form of a bracelet or an armband.

People are increasingly bombarded with electronic devices that must be retained about the person for reasons of security or convenience. These may include identity cards, smart cards, credit cards and so on. A problem that arises is finding space to store these items about the person. The problem is particularly acute when a person is wearing little clothing, such as when at a swimming pool or when indulging in physical activity, such as running. Under these circumstances it is not appropriate to carry a wallet or bag but it is still necessary to keep items such as ID badges and smart cards containing electronic cash because these might well be required during or after such activities or because there is no secure place to leave them. There is also a risk that the activity being undertaken will damage the items and cause possibly irretrievable loss of information that they carry.

Even if there is somewhere to keep electronic items about the person or nearby, it is an annoyance that every time one wishes to use a particular item, for instance to make a transaction, one has to find the appropriate item in the wallet or bag in which it is stored, take it out, hand it to a sales assistant or insert it into an ATM, for example, receive it back, and return it to storage for the next occasion of use. There is every chance that the item will be dropped, forgotten or mislaid during these steps.

More generally, there is a problem with public acceptance of proliferating digital information devices such as smart cards and so on. Such devices have advantages of convenience and integration for both consumer and provider, but unless the devices are presented in an attractive way, the consumer will not readily accept changing to them. The devices should be attractive in both appearance and function, particularly in terms of their ease and reliability of use.

There is a particular need to develop more user-friendly and yet secure ways of transmitting data to and from a digital information device, especially between a device carried by one person and a device carried by another person for the exchange of messages, e-cash and so on between them. The use of intermediate information-transferring devices such as smart card readers is a notable inconvenience in this respect. To be a natural extension of the self, data transmission to or from a digital information device should ideally involve the user in as little forethought as starting a conversation with, or shaking the hand of, a person one has just met.

Compactness and robustness, too, are important aspects of a digital information device that will be carried about the person. People will not entrust sensitive and valuable information to a medium that can easily be lost or damaged in everyday life. With this in mind, the inventors have found an existing technology that forms a theme of this specification - namely the 'iButton' (trade mark) - but it should be understood clearly at the outset that the invention defined herein is not limited to the use of iButton technology.

iButtons are sometimes described as Touch Memory Microcans or Dallas Buttons (both are trade marks) and are available from Dallas Semiconductor Corporation, of Texas, USA. All necessary technical information on iButtons and related technologies is available from Dallas Semiconductor, for example at its web site www.ibutton.com, but it is appropriate here to summarise their main characteristics.

As its name suggests, an iButton is a button-shaped device in the form of a small, flat cylinder of stainless steel rather like a watch battery in appearance, if slightly larger. It is approximately 16mm in diameter and is currently available in two thicknesses, namely 3.1mm and 5.89mm. The watch battery analogy also applies to connectivity and I/O: one face of the case constitutes a data electrode whereas the surrounding rim and the other face of the case constitute a ground electrode. The resulting need for just two connections benefits reliability in use.

The stainless steel case seals around and armours electronics within, including a quantity of non-volatile memory and, in some models such as the Java-powered cryptographic iButton, a microprocessor. The quantity and type of memory varies from model to model but currently extends to more than 64Kbits of RAM in iButtons designed specifically for large storage capacity. Other iButtons contain EEPROM, a real-time clock, a temperature sensor or a transaction counter enabling the iButton to be used as a purse for e-cash 'small change'.

All iButton variants have a unique factory-set 64-bit registration number, provision for digital identification and information transfer by momentary contact (with, for example, Dallas Semiconductors' 'Blue Dot' (trade mark) receptor cabled to a parallel or serial port of a PC), and the ability to operate standalone or networked using Dallas Semiconductors' '1-Wire' (trade mark) interface. iButtons form a family of components that connect easily into Dallas Semiconductors' Micro LAN (trade mark) local area network architecture and this is the architecture used in present embodiments of the invention. Nevertheless, it is reiterated that other forms of non-volatile memory and other architectures may equally be used within the broad inventive concept.

Recognising the suitability of iButtons to be carried about the person, Dallas Semiconductors Corporation offers so-called digital jewellery enabling a single iButton to be worn on an accessory such as a ring or a wristwatch, or attached to something kept in a pocket or a handbag like a wallet or a key fob. The idea is that people are used to guarding such an accessory or keeping it about their person, thus securing the information held on the iButton. This also keeps the iButton readily accessible so that, for example, accessing a limited-access area is simply a case of pressing an iButton-equipped ring into a Blue Dot receptor adjacent a door, which door is unlocked upon reading the authorised ID number of the iButton.

In a conceptually-similar application by an iButton developer, The Ichor Corporation of South Carolina, USA, an iButton is fixed to a medical bracelet to form the WristRecord (trade mark). In this way, patients within hospitals carry personal medical information in a manner enabling an attending physician or nurse to extract and view that information by touching the iButton to a reader on a hand-held PC. It is similarly possible to write new information to the iButton, for example to record a change of the patient's medication.

Whilst iButtons come in many forms and in some cases are programmable to suit specific applications, thus being capable of performing myriad functions, none of the aforesaid ideas fully achieve the objectives of the present invention. If, say, a user carries e-cash in a transaction-counter iButton mounted on a wristwatch, spending or replenishing that e-cash requires the iButton to be aimed, inconveniently, into a small receptor on an ATM or a sales terminal. There must be proper alignment between the iButton and the receptor and this alignment must be maintained momentarily until data transfer is complete.

There is also no convenient way in which the user can give e-cash to or receive e-cash from a friend similarly equipped with an iButton facility, at least without employing a PC to read the information from one iButton and separately to write that information to the other iButton. This problem obviously applies to information of any kind that one may wish to exchange, such as an e-mail message.

Also, what if the user wants to carry another, unrelated function, say, a gallery of electronic pictures of his or her family? In existing iButton proposals, multi-functionality can be achieved only by carrying several iButtons separately on different items of jewellery or the like. The likelihood of confusion and loss is plain to see, and in any event the user probably will not wish to carry a further accessory merely to enjoy the use of another iButton. Problems can arise even if only one function is needed on a particular occasion: what if the user does not want to carry, say, a wallet on that occasion because of security risks but it so happens that the user's desired function is on an iButton attached to a wallet? The user is then faced with bringing an unwanted wallet and possibly losing it, or leaving the iButton at home and managing without the desired function.

Whilst some iButtons could be programmed to perform more than one function, this would inevitably compromise their memory and processing resources to the possible detriment of every function. The more different the functions are in terms of their resource demands, the bigger this problem. After all, this is why different iButtons have arisen for different tasks.

Finally, it will be recalled that, for public acceptance, attractiveness should be visual as well as functional. However, it will be apparent that the iButtons described above have to be exposed in order to work, as contact with a receptor enables I/O. In fact, the iButton must sit proud of its surroundings to give access to the ground electrode that surrounds the data electrode. Whilst beauty is in the eye of the beholder, it is undeniable that an exposed and protruding iButton dominates the external appearance of the article, such as a ring or a watch, that carries it. This takes away much of the aesthetic freedom desired by a designer of that article.

Whilst steps could be taken to conceal an iButton for aesthetic purposes, such steps would go away from the essential simplicity of iButton operation. For example, it would be a chore to have to uncover a concealed iButton every time that one wished to access it for data transfer, just as it would be annoying to have to take off and reverse, say, a watch bracelet to expose an iButton hidden underneath.

It does not take many of these irritations to build up an insurmountable level of public resistance to a new idea. Such resistance is already being witnessed, and is preventing the proliferation of technologies that will eventually be seen as having great benefit. Accordingly, there remains a need for a user-friendly data storage apparatus that ameliorates these problems. It is an object of the present invention to provide such an apparatus and related methods of operation.

According to a first aspect of present invention, a digital data storage apparatus comprises attachment means to removably attach the apparatus directly to the human body, storage means for storing data and communication means for transferring data into and out of the apparatus. The invention is characterised in that the storage means comprises one or more ports, each for connection to a discrete storage module removably attachable to the apparatus and in that the communication means includes contact means separate from the ports and the storage means, the contact means being adapted to transfer data by physical contact with the apparatus.

The invention may be thought of as providing a "wearable computing" device which, conveniently, may take the form of a bracelet. By means of the invention, therefore, multi-functional apparatus for storing digital data can be akin to an item of clothing or jewellery. The storage means may be arranged to store securely a balance of electronic cash, a unique ID number and/or unique means for accessing a bank account and so on. The storage means may then be regarded as a floppy disk for the body, or a multi-function smart card.

As the storage means comprises or includes one or more non-volatile memory devices which may be removed from the apparatus, the user may then customise the apparatus according to need by fitting memory devices whose stored data embodies the functions deemed relevant by the user. Such memory devices optionally have processing capability.

There are preferably first and second contact means that are physically and functionally separate from one another. The first contact means is suitably adapted for direct data transfer contact with a functionally identical contact means of another digital data storage apparatus. To that end, the first contact means suitably comprises interlock formations co-operable with functionally identical interlock formations of the other apparatus to effect and maintain said data transfer contact. It is preferred that these interlock formations are adapted to snap fit resiliently together when the respective contact means are pushed together.

The apparatus thereby includes means to permit docking with a similar such apparatus so that messages can be transferred between them. The messages can be read from a public terminal or personal computing device when the user next docks the apparatus at one of these.

The second contact means, on the other hand, is preferably adapted for direct data transfer contact with a terminal or interface. The second contact means may therefore comprise first and second conductors exposed on a surface of the apparatus, which conductors are preferably on opposed sides or edges of the apparatus.

To create an interface of great simplicity, the apparatus preferably further includes means for sensing the type of apparatus or data connected to the communication means and for selecting an appropriate one of the storage modules for data transfer. The storage means and the communication means are advantageously connected by means of a network, such as the MicroLan.

Again for convenience of use, the apparatus may have activation means responsive to operation of the attachment means when attaching the apparatus to the human body. For example, the activation means may be responsive to coupling of first and second conductive attachment parts. These conductive attachment parts can be pads of conductive hook-and-eye material.

A visual display means can indicate, *inter alia*, the status of data transfer by the communication means. Further, the apparatus may be provided with a motion sensor, such as an accelerometer, and/or a temperature sensor which may be arranged to control the visual display. The display thus responds to the motion or temperature of the user.

The apparatus of the invention may also include wireless communication means, and optionally also means for transmitting a message via the wireless communication means and storing messages received via the wireless communication means. For security, the means for transmitting a message via the wireless communication means may be denied access to certain data stored in the storage means.

The attachment means preferably comprises means to attach the apparatus around a limb of the human body, ideally taking the form of a bracelet attachable to a wearer's wrist or forearm. In that instance, the first and second contacts of the second contact means advantageously extend substantially around the wearer's wrist or forearm and are spaced along the wearer's wrist or forearm, the first and second contacts preferably being on opposed long edges of the bracelet. This helps to ensure reliable contact and data transfer.

The invention extends to a public terminal or an interface comprising input means, display means and communication means for exchanging data by physical contact with a digital data storage apparatus as defined herein. The communication means of the terminal or the interface suitably comprises a receptor in which the wearer can position the bracelet, the receptor having first and second spaced conductors positioned to contact the first and second contacts of the second contact means when the bracelet is so positioned.

The terminal or interface advantageously further comprises a locating formation for holding the first and second contacts of the apparatus in register with the conductors. This formation is preferably situated between the first and second spaced conductors and, in a particularly elegant arrangement, it is a recess adapted to receive a protruding part of the apparatus, notably the first contact means. To that end, the recess may be cylindrical or a transverse groove.

In preferred embodiments, therefore, the communication means includes a means for docking with a public terminal such as an automatic teller machine (ATM). The public terminal may allow the user access to his or her bank account, allow an electronic cash memory in the apparatus to be credited with funds and/or provide access to other information services such as e-mail and ticketing. Another possibility is an electronic point-of-sale (POS) terminal where the user may pay for goods by having e-cash debited from the device, and at the same time receiving promotional messages from the store. In addition, the docking means may permit connection to a personal computing device such as a PC, Palm Pilot (trade mark) or the like.

In embodiments including means for wireless communication, this may be arranged to perform a "multicast" over a local area to other such apparatus. These other apparatuses may then be arranged to store a transmitted message allowing their users to retrieve them later on. Messages may also be transmitted by, for example, a retail store or a bank.

Further preferred features of the present invention will be apparent upon reading the following description. This description is given by way of example, with reference to the accompanying drawings in which:
Figure 1 is a top plan view of a data storage apparatus in accordance with this invention, in the form of a bracelet for attachment around a user's wrist, this view showing the outer face of the bracelet that will be exposed in use, facing away from the user's wrist;
Figure 2 is a sectional side view on line II-II of Figure 1;
Figure 3 is a side elevation of the apparatus of Figures 1 and 2, taken from the same side as the sectional view of Figure 2;
Figure 4 is an underside plan view of the apparatus of Figures 1 to 3, showing the inner face of the bracelet that in use will lie against the user's wrist;
Figure 5 is a top perspective view of the apparatus of Figures 1 to 4, partially cut away;
Figure 6 is a top plan view of a circuit board within the apparatus of Figures 1 to 5, showing a top face of the circuit board corresponding to the outer face of the bracelet;
Figure 7 is a bottom plan view of the circuit board of Figure 6, showing a bottom face of the circuit board corresponding to the inner face of the bracelet;
Figure 8 is a block schematic diagram of the apparatus of the foregoing Figures;
Figure 9 is an enlarged perspective view of a coupler of the apparatus, also visible in Figures 1, 2, 3 and 5;
Figure 10 is a schematic cross-sectional side view of the coupler of Figure 9;
Figure 11 is a schematic perspective view of a public terminal provided with docking means; and
Figure 12 is a schematic perspective view of an interface for use with a personal computing device.

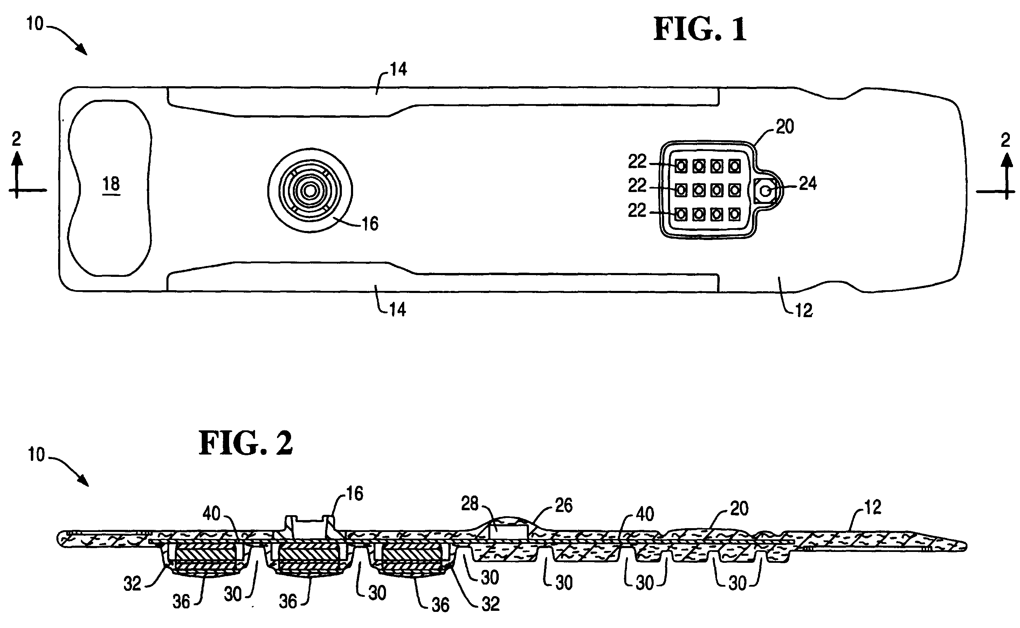

In the embodiment illustrated in Figures 1 to 10, the apparatus takes the form of a bracelet 10 comprising a generally oblong body 12 of flexible and resilient material which in this preferred embodiment is moulded rubber but could be leather, fabric or the like. A conductive strip 14 extends along and wraps around each long edge of the body 12. As will be explained, the strips 14 are used together to read data into, or to write data from, memory within the bracelet 10. In the embodiment described, the conductive strips 14 are of a conductive fabric.

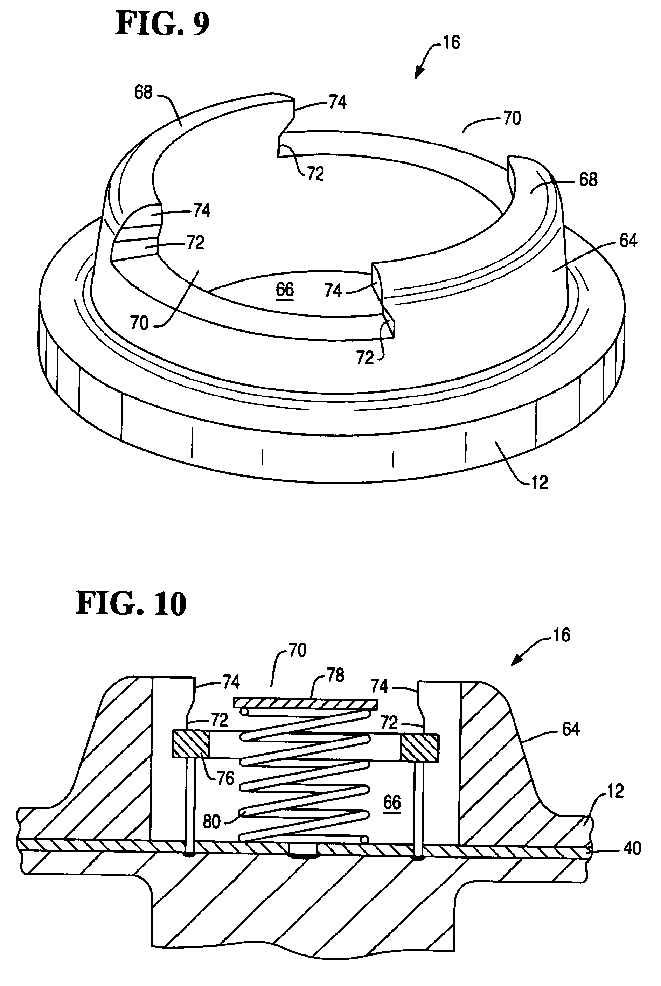

Another way of transferring data into and out of the bracelet 10 is a coupler 16 protruding from the outer face of the bracelet 10 near one of its ends. This coupler 16 will be described in more detail later in this specification, with particular reference to Figures 9 and 10.

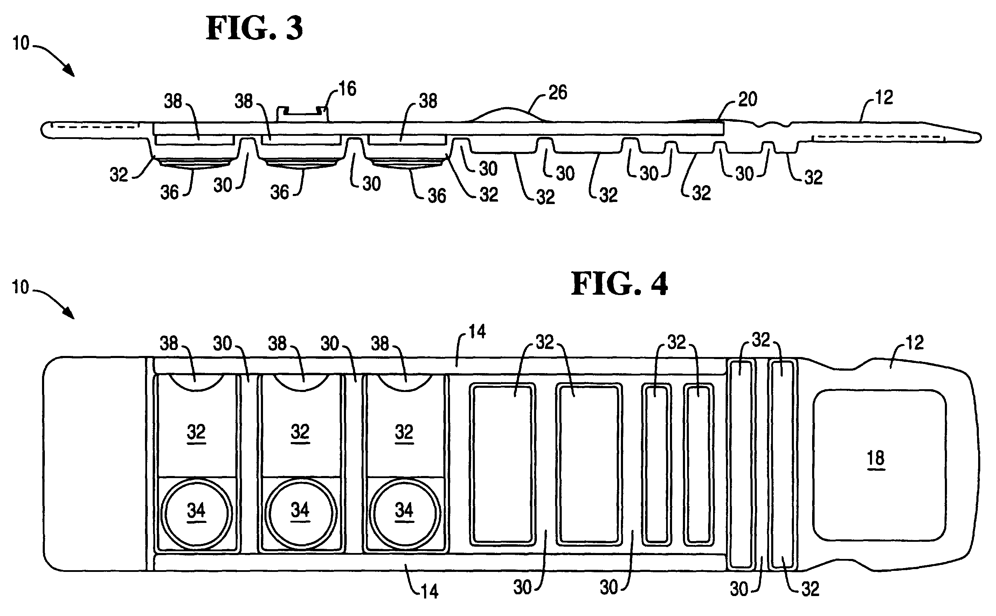

The opposed ends of the body 12 carry co-operable fastening means, in this case pads 18 of hook-and-eye material such as are sold under the trade mark Velcro. One pad 18 is on the outer face and hence visible in Figure 1, and the other pad 18 is on the inner face and hence visible in Figure 4. This opposed disposition allows the pads 18 to bind together when the bracelet 10 is looped around the wrist and its ends are overlapped to bring the pads 18 into contact with each other.

In this preferred embodiment, contact between the pads 18 is not merely mechanical: the pads 18 are of conductive material so that bringing them into contact with each other upon donning the bracelet 10 effects electrical contact between them and so can complete a circuit. That facility is used in this embodiment to turn on the bracelet 10, for example to bring the bracelet 10 from a dormant memory-preserving state into an active state ready for use. It will be noted that the multiplicity of contact points inherent in a hook-and-eye fastening is to the benefit of reliable electrical connection.

A display 20 comprising an array of a dozen tri-colour light emitting diodes (LEDs) 22 is disposed near the end of the body 12 opposite the coupler 16, to be visible from the exposed outer face in use. This display 20 can perform a number of display functions, as will be explained. A push-switch 24 is embedded into the body 12 at an edge of the display 20, enabling the user to control the display 20 without removing the bracelet 10, for example to turn the display 20 on or off.

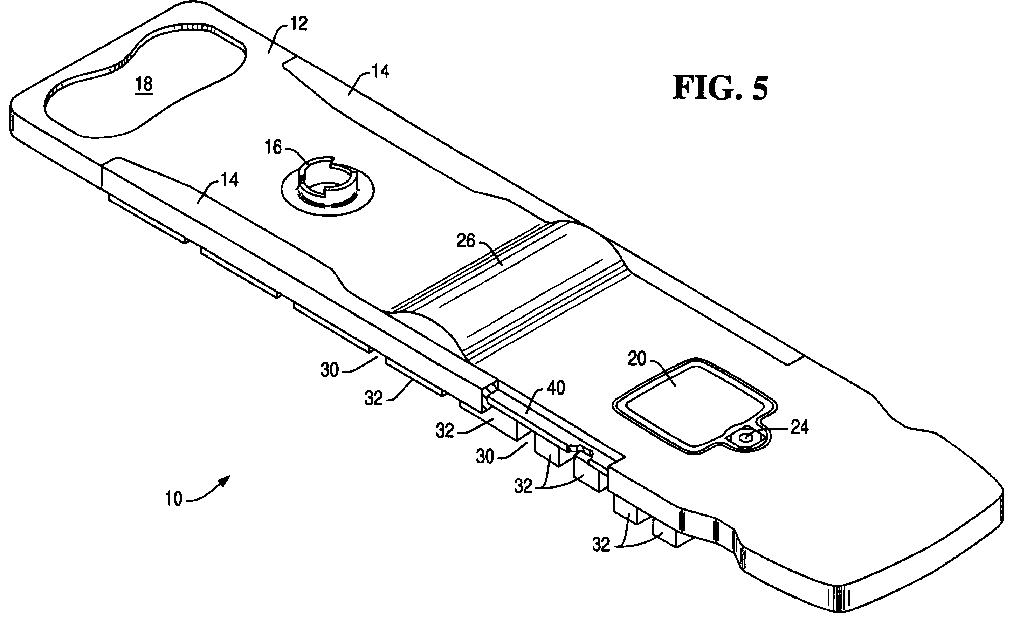

As will be particularly evident from the sectional and side views of Figures 2 and 3 and the perspective view of Figure 5, the outer face of the bracelet 10 is generally smooth apart from the aforementioned protruding coupler 16 near one end, the largely recessed display 20 near the other end, and a bulge 26 extending across the body 12 near its mid point, between the coupler 16 and the display 20. The bulge 26 accommodates a large electronic component, in this case an accelerometer 28 as will be explained, without increasing the thickness of the bracelet 10 as a whole.

It will also be evident from Figures 2 and 3 that the inner face of the bracelet 10 undulates considerably, being of generally castellated longitudinal section defining transverse grooves 30 between protruding housings 32 for various electronic componentry. The body 12 is at its thinnest at these grooves 30, thus maintaining its flexibility despite having the thickness necessary to accommodate the electronics within the housings 32. The width of the grooves 30 is such that the housings 32 can freely angle toward one another without clashing as the bracelet 10 is bent around a user's wrist and so effectively squeezes the inner face lengthways.

The general layout or architecture of the bracelet 10, in which electronic components and their housings are largely confined to the inner face, gives the designer more freedom to style the outer face in whatever way may be desired from an aesthetic standpoint.

The principal features visible on the inner face of the bracelet 10, as best shown in Figure 4, are three iButton ports 34 situated side-by-side near the coupler 16 end of the bracelet 10. That positioning is not critical, however: any other desired position may be chosen instead. Each port 34 is provided with means for holding a respective iButton 36 securely and means for making the necessary two secure connections to the iButton 36. Dallas Semiconductors Corporation supplies a wide range of mounting hardware for iButtons, including mounts suitable to construct the ports 34 used in the illustrated embodiment. Such mounts have contacts that effect both the mechanical and electrical connections necessary to support any iButton 36.

As aforesaid, two thicknesses of iButton are available, 3.1mm and 5.89mm. The ports 34 may readily hold either because they have common physical and electric connections. With the bracelet 10 removed from the user's wrist, the iButtons 36 are simply pressed in to the ports 34 from the inner face of the bracelet 10 until secure mechanical and electrical connection has been achieved.

It will be noted that the iButton ports 34 are offset toward one long edge of the bracelet 10. This is to allow room beside each port 34 for a button-style battery (not shown) that can be inserted into a respective slot 38 moulded in the side of the rubber body 12 as shown in Figure 3. The resilience of the body 12 can be employed to close the slots 38 before and after insertion or removal of a battery. The side-by-side positioning of iButtons 34 and batteries is advantageous in view of their similarities in size, enabling these components (which are among the largest to be carried by the bracelet) to lie compactly in a manner that does not unduly increase the size, and especially the thickness, of the bracelet 10.

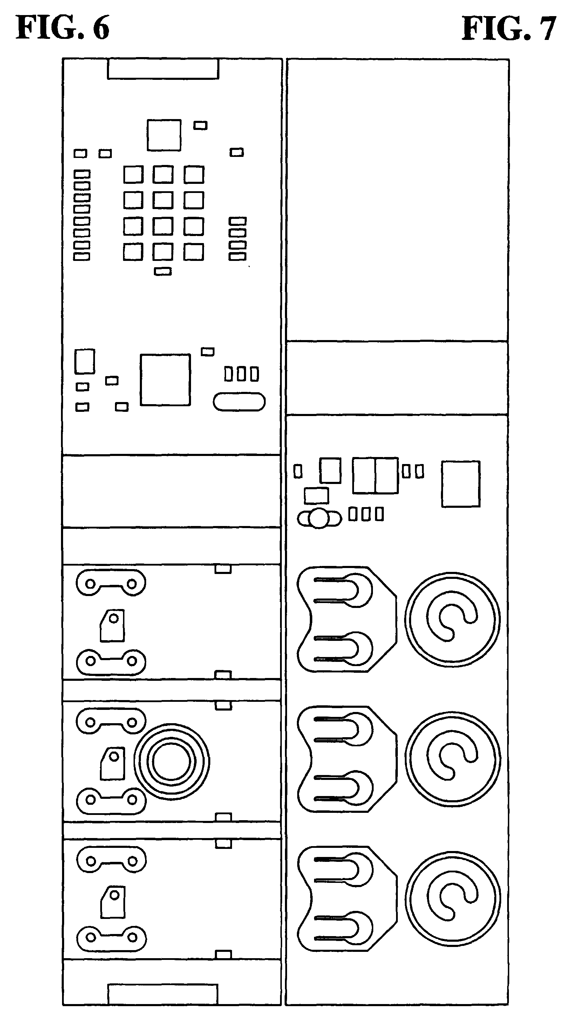

The sectional view of Figure 2 shows a flexible printed circuit board (PCB) 40 extending along the body 12 from near one fastening pad 18 to near the other fastening pad 18. An edge portion of the PCB 40 is also visible in the perspective view of Figure 5, where one of the conductive fabric strips 14 has been partially cut away for that purpose. Figures 6 and 7 show the PCB 40 in isolation with the components attached thereto numbered in accordance with Figures 1 to 5, except for battery holders 42, a microcontroller 44 and an accelerometer 46. All components are mounted to the PCB 40 using well-known techniques but it will be noted from Figure 6 in particular that the printed circuit conductor extends at 48 and 50 to the opposed ends of the PCB 40 for connection to the respective conductive fastener pads 18.

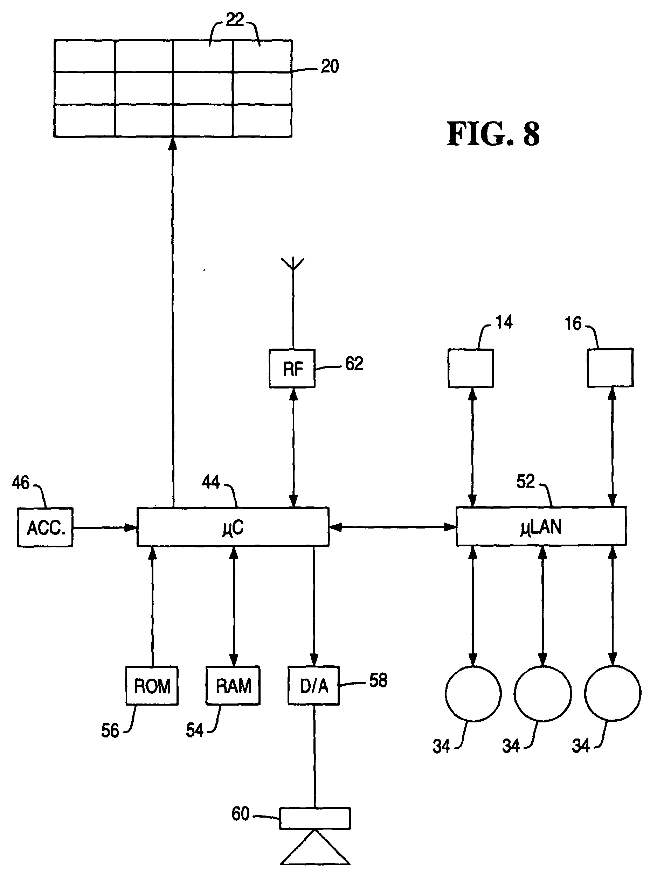

Figure 8 is a block schematic diagram of the circuitry within the bracelet. The microcontroller (µC) 44 is connected by means of a MicroLAN local area network (µLAN) 52. In this embodiment, the microcontroller 44 is provided with sufficient I/O capability to drive directly the LED array of the display 20. The LED array comprises 12 LEDs 22 arranged in a 3 by 4 array. A separate LED driver may be required where there is insufficient spare I/O capacity on the microcontroller 44. The microcontroller 44 is also connected directly to a motion sensor 46. One such motion sensor 46 can be an Analogue Devices ADXL202 accelerometer 46. This is a two axis device which outputs a 1kHz PWM signal for each of the two axes. The microcontroller 44 reads these signals using a capture-based interrupt. The MicroLAN 52 is connected to the coupler 16, the pair of conductive strips 14 and the three iButton ports 34.

Software is provided within the microcontroller 44 to identify the correct iButton 36 for a particular action and to activate that iButton 36. The following components are optional and will be fitted when required: a random access memory (RAM) 54; a read only memory (ROM) 56; and a digital-to-analogue converter (D/A) 58 to which, in turn, is connected an audio transducer 60; and a radio frequency transceiver 62. The operation of the apparatus will be described subsequently.

The digital-to-analogue converter (D/A) 58 and audio transducer 60 enable the user to play a digitally-sampled section of sound stored in an iButton 36.

In this example the microcontroller 44 used is a microchip PIC17C756 which is an 8-bit RISC device. This microcontroller 44 is particularly appropriate to the present application for the following reasons:
- Enough I/O pins to directly drive the LED array with no support hardware;
- Availability in a 12mm, 64 pin TQFP package to minimize board space;
- Large amounts of internal RAM (902 bytes) to hold data and LED animations;
- Clock speeds available to 33mHz;
- Ample ROM for program development and future expansion;
- Multiple interrupt vectors for fast response to real-time events;
- Internal timers and other modules to minimise additional hardware.

In the present embodiment the microcontroller 44 is operated at a clock rate of only 4mHz, giving a typical instruction speed of 1µS. Consequently, there is capacity for expansion.

The accelerometer 46 acts as a motion sensor outputting motion signals to the microprocessor 44. With suitable programming of the microprocessor 44, these signals may be used to alter the pattern of LEDs 22 that are lit or other display as appropriate. In this way, the display 20 becomes an intriguing novelty that responds to the wearer's movements.

Indeed, with suitable programming, the display 20 can reflect other attributes of the wearer. One such attribute is temperature and in this respect, it is convenient that Dallas Semiconductors Corporation offers an iButton comprising a thermometer having a serial digital read-out and a measuring range of between -40°C and 85°C. By fitting one of these iButtons into an available port 34, the temperature of the user can be monitored and the LED or other display 20 altered in dependence on absolute temperature or changes in temperature, not unlike mood rings which were popular in the 1970s. For example, a further row or column of the LED matrix display 20 can be illuminated with increasing temperature, and/or their colour can change. The positioning of the mounted iButtons 36 against the wearer's skin assists in accurate temperature measurement.

Figures 9 and 10 show, respectively, perspective and sectional views of the coupler 16. This coupler 16 is intended to provide a data connection to a similar bracelet 10, for example to allow children to exchange messages amongst one another. Another possibility is the exchange of electronic business cards. There are of course myriad other possibilities for information exchange.

This aspect of the invention envisages an 'electronic handshake' where the coupler 16 is reserved for exchange of messages between two bracelets 10. This requires physical contact between the two bracelets 10 for exchange of information. It is envisaged that this information will be composed in the PC, pre-programmed in an iButton 36 or obtained from a public terminal, and once downloaded to the bracelet 10, transferred to a second bracelet 10 through physical contact and read when the second bracelet 10 is docked on its own PC or other terminal.

Such information can be almost anything, such as text, a picture, sound or any combination of these, or a program. Messages can be composed and read on, for example, an ATM machine equipped with a keyboard interface, as will be outlined below.

The coupler 16 contains contacts for electrical connection but also provides for reliable mechanical connection so that the electrical connection is assured throughout an instance of data transfer between coupled bracelets 10.

The mechanical connection will be dealt with first with reference to Figure 9, from which electrical contacts within the coupler have been omitted. It will be seen that the coupler 16 comprises an annular surrounding wall 64 of circular cross-section upstanding from the outer face of the bracelet 10. The recess 66 defined within the wall 64 houses the omitted electrical contacts, as will be evident from the description of Figure 10 that follows later.

The wall 64 is moulded integrally from the rubber that forms the body 12 of the bracelet 10 and hence shares its flexibility and resilience. Interlocking lip formations are moulded into the upper edge or rim of the wall, which formations comprise an opposed pair of male formations 68 and an opposed pair of female formations 70, each formation 68,70 extending over approximately 90° of arc and alternating male-female-male-female moving around the circular cross-section of the wall 64.

The female formations 70 are effectively cut-outs in the rim of the wall 64 and each have an undercut 72 at each end. These undercuts 72 define corresponding overhangs 74 at each end of the neighbouring male formations 68. The female formations 70 of one coupler 16 are thereby shaped to mate with the male formations 68 of another, corresponding coupler 16.

In use, the couplers 16 of respective bracelets 10 are simply pushed together by their respective users with the male formations 68 of one coupler 16 and the female formations 70 of the other coupler 16 in broad alignment. It will be noted that alignment between bracelets 10 and their couplers 16 can be achieved in either or two mutual angular orientations, each 180° apart. Engagement between the respective male 68 and female 70 formations is completed when the overhangs 74 of one coupler 16 snap into engagement with the undercuts 72 of the other coupler 16 and vice-versa. This snap-fit can be felt by the respective users as confirmation of correct engagement and serves to hold the bracelets 10 together until the users deliberately pull the bracelets 10 apart, whereupon the couplers 16 snap out of engagement to confirm to the users that engagement has ceased.

Further to confirm the status of information transfer, it is envisaged that one or more of the rows or columns of the LED display 20 will illuminate when the two bracelets 10 are attached successfully as well as when the transfer is complete. Different colours can be used to indicate transfer and reception.

The incline and resilience of the undercuts 72 and overhangs 74 ensures that when engaged with one another, the undercuts 72 and overhangs 74 co-operate in a manner that not only prevents the couplers 16 separating during data transfer but pulls the couplers 16 together to ensure good electrical contact.

The sectional view of Figure 10 is taken through the mid-points of the male formations 68. It will be seen that within the generally cylindrical recess 66 defined by the surrounding annular wall 64 lie two electrodes 76,78, both supported by and soldered to the PCB 40 in typical fashion. The electrodes 76,78 are an annular data electrode 76 surrounding a circular central ground electrode 78. The data electrode 76 lies about level with the base of the cut-out female formations 70 so that connection to the data electrode 76 of a corresponding coupler 16 takes place when the couplers 16 are fully engaged. Conversely, the ground electrode 78 lies outwardly with respect to the data electrode 76 so that connection to the ground electrode 78 of a corresponding coupler 16 takes place before the couplers 16 are fully engaged and hence before connection takes place between the respective data electrodes 76. This establishes a common ground voltage between the coupled bracelets 10 and ensures correct operation when coupled, in particular avoiding the possibility of damage to the circuitry of either bracelet 10.

It will be noted that the ground electrode 78 is biased into its outward position by a spring 80 that permits the ground electrode 78 to retract under pressure from the corresponding ground electrode 78 of another coupler 16 during coupling. The spring 80 also helps to maintain conductive contact between the ground electrodes 78. Of course, it is not essential that the spring 80 is a coil spring as shown.

Whilst the operation of the coupler 16 has been described with reference to a pair of bracelets 10, it should be understood that matching couplers 16 could be applied to different data-carrying articles. For example, a bracelet 10 carried by one user can exchange data with, say, a belt carried by another user, provided that each has a matching coupler 16.

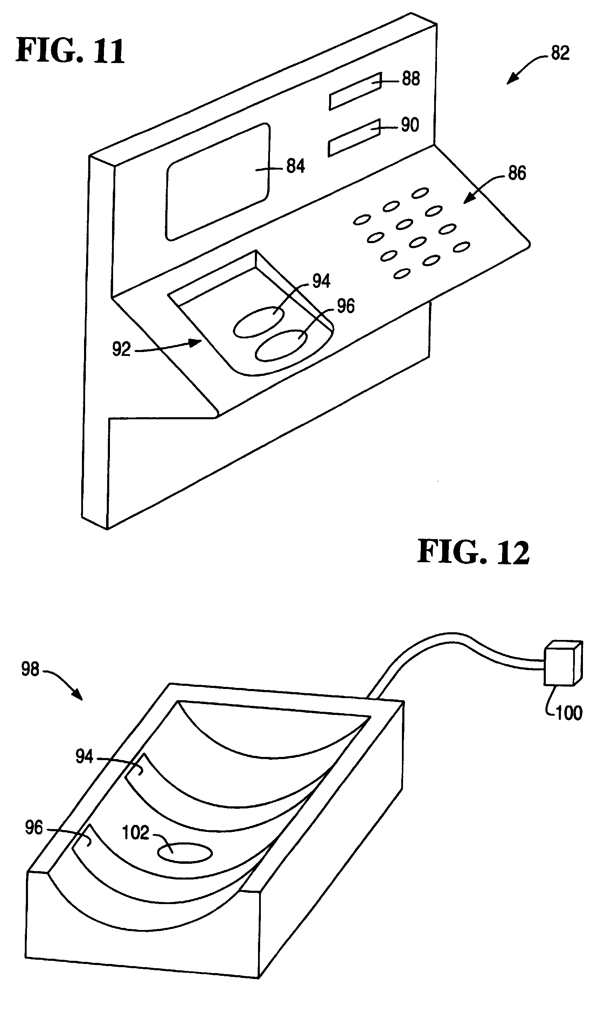

Reference will finally be made to Figures 11 and 12 to describe the function of the edge contacts 14.

The edge contacts 14 are arranged to interface with a public terminal 82 such as a banking terminal or information terminal. One of the ports 34 may contain an iButton 36 that is programmed with electronic cash (e-cash). The balance of e-cash stored within the iButton 36 can thus be increased by interfacing with a banking terminal 82. Another iButton 36 may be programmed to operate as the user's ATM identification, allowing cash withdrawal in a similar manner to a magnetic card and PIN.

Figure 11 shows a public terminal 82, such as an automatic teller machine (ATM) comprising an embodiment of the present invention. The terminal 82 includes a display screen 84, input buttons 86, a card insertion slot 88, a money dispensing slot 90 and a communication port 92 including contact bands 94 and 96. The communication port 92 allows a bracelet 10 as described in the preceding Figures to be docked with the terminal 82. The two conductive bands 14 contact the bands 94, 96 when the user places his or her wrist in the port 92. The public terminal 82 then takes control of the non-volatile memory in the bracelet 10 as will be discussed below.

Whilst an ATM 82 having conventional card insertion and money distribution slots is shown, it is possible for the public terminal to omit these features and be more information-based. It is still possible for the user to withdraw cash from such a terminal, but the withdrawal must then be by way of e-cash.

Figure 12 shows an interface 98 for connection by plug 100 to a personal computer, Palm Pilot (trade mark) organiser and so on (not shown). The interface 98 comprises a port 92 including contacts 94 and 96 as discussed in relation to Figure 11 above. The operation of the bracelet 10 when docked to this private terminal 98 is analogous to that when docked with a public terminal 82. However, this embodiment includes an advantageous option that may also be applied to the public terminal of Figure 11: this option is a circular recess 102 between the contacts 94 and 96. The recess 102 is positioned and dimensioned to receive the protruding coupler 16 of the bracelet 10 and thereby to locate the edge contacts 14 of the bracelet 10 in register with the contacts 94 and 96. The recess 102 could alternatively be in the form of a transverse groove to allow substantial freedom of angular alignment about the user's forearm or wrist while still ensuring proper alignment between the edge contacts 14 and the terminal contacts 94, 96.

In addition to banking terminals, the apparatus of this invention may interface with other public or private terminals for the purposes of information exchange. Information may, for example, be returned to the apparatus, which may in turn be stored in an appropriate iButton. Such information may be used to configure an iButton or the apparatus as a whole, or may include travel timetables, theatre seat availability, electronic tickets, permits to travel and so on. Any cost for using this service might be deducted from a non-volatile memory on the apparatus which carries e-cash, from memory identifying the user's credit card account/bank account or be charged to a separate account maintained by the service provider. The user may also be able to read his or her e-mail at a public or private terminal. This may for example be done at a banking terminal.

One interesting application is to store shopping lists to be printed later at a terminal situated at a supermarket/shopping mall. Such lists could be printed with vouchers for promotional items then on offer, and with other special promotional offers such as sale prices or the availability of extra loyalty-card bonus points highlighted.

When the interface with a personal computer or personal digital assistant is used, the technical considerations will be similar to those for docking with a public terminal but the requirement for charging the user for the service may no longer be required.

One function of an embodiment of the apparatus is "multicasting" via wireless communication over a short area. The user may download a message from his or her personal computer or a public terminal such as an ATM into a non-volatile memory, such as an iButton. The microprocessor 44 is then programmed to transmit this message via the RF transceiver 62 at predetermined intervals. The microprocessor 44 also monitors the receiver circuitry of transceiver 62 for multicasts from similar apparatus or public multicasts, such as from a retail store or a bank. These are stored within the apparatus, for example within an iButton. When the user next docks the apparatus with a public or private terminal, he or she will be given the option to read these messages.

While the wireless communication means may be used to transmit between apparatus and also to perform communications with public or private terminals, it is preferred that more sensitive communications are conducted via the conductive strips 14 or the coupler 16. This will prevent a digital scanner from being used to read the unique code of a particular iButton when, for example, a cash transaction is conducted. The microprocessor 44 is thus programmed to isolate certain information stored in a particular non-volatile memory or memories from the RF transceiver 62.

Similarly, the coupler 16 for inter-apparatus communication may also be isolated from sensitive data which are then transferable exclusively via the conductive strips 14. Messages to be transmitted in this way may be composed in the same way as messages to be "multicasted".

With the apparatus, interface software for the MicroLAN 52 may be arranged with the following functions:
- reset;
- write bit;
- read bit;
- write byte;
- read byte;
- search; and
- arbitration.

Various routines stored in the ROM 56, RAM 54 or in the iButtons 36 can use these routines to control the MicroLAN 52. The arbitration function is provided to control sharing of the MicroLAN 52 between the apparatus and another similar apparatus or an external terminal. The microcontroller 44 may be arranged to run the arbitration routine at regular intervals so that coupling is detected.

When the apparatus is connected to another similar apparatus, one or other of them will be a master while the remaining apparatus will be the slave. Which apparatus is master may, for example, depend upon which of the apparatuses runs their arbitration code first after mutual connection. When the apparatus is connected to an external terminal the apparatus will always operate in slave mode. In the master mode the microcontroller 44 effectively treats any iButtons 36 connected to the slave apparatus as its own and data can be shifted between them along the MicroLAN 52 while the microcontroller 44 in the slave apparatus performs no active role. This microcontroller 44 is preferably arranged to read the MicroLAN 52 at regular intervals so that it can determine when contact is broken and re-assert control over its own MicroLAN 52.

The search function reads each of the iButtons 36 present on the MicroLAN 52 and identifies their function (such as containing messages for transmission, received messages, e-cash and so on). This information is stored within the microcontroller 44 memory so that, on contact with another apparatus, the relevant iButton 36 will be accessed in accordance with the nature of the docking station, terminal or information in question. Put another way, the MicroLAN 52 polls when connected to various docking stations so as to recognise automatically which iButton 36 needs to be used without demanding the user to go over a menu, thus developing an accessible and intelligent interface.

The remaining functions are self-explanatory. The implementation of all MicroLAN control functions is described in literature available from Dallas Semiconductor Corporation. Generally speaking, these low-level functions will be written in assembler and higher level programs can be written which make use of these lower-level routines. The techniques of programming the device will depend on the particular implementation of the microcontroller, non-volatile memory and so on. Those of ordinary skill in the art can readily accomplish the necessary programming.

Many variations are possible without departing from the inventive concept.

For example, using Java iButtons running a version of Java called JavaCard (trade marks acknowledged), an operating system designed for smart cards, a wearable MicroLAN device could be used to interface with legacy smart card based systems, and perform standard smart card functions such as cryptography, identification etc.

Whereas conductive fabric has been proposed in the preferred embodiment to make the conductive edge strips, these strips could be of flexible metal, possibly looking like bands of silver when the bracelet is worn around a user's wrist. Other aesthetic refinements are possible with the assistance of the bracelet architecture described: for example, the LEDs of the display could be interspersed with beads of a similar appearance to enhance the attractiveness of the bracelet.

Instead of an LED array, the display could employ a fibre optic array or a strip of electroluminescent/UL foil may be used.

Whilst hook-and-eye fasteners have been proposed to secure the bracelet, other techniques, such as a buckle, a clasp or even an expanding (sprung) bracelet may be used.

Any suitable number of ports for iButtons may be used, although between one and five ports is typical and between two and five is preferred.

Accordingly, the invention offers a platform for the provision and use of multiple digital communication and storage functions on one "wearable computing" device. The design and function set of the device can be customised to appeal to different target groups of consumers, each function being embodied in a single iButton which can be attached to any of a plurality of ports on the bracelet, the intention being that third-party manufacturers are able to produce further modules that will be compatible with the bracelet architecture. These functions are activated automatically upon contact with the appropriate docking station or other device.

Whilst functionally sophisticated and powerful, the invention also creates an electronic device that will be regarded by many users as a personal fashion accessory. By developing, for example, a bracelet that will combine attractive design and functionality, the invention departs from traditional perceptions of wearable electronic devices. Existing devices disregard the fact that they need to be worn and comply with notions of style, fashion and desirability. To the contrary, the invention exploits the interface between aesthetic design and electronic engineering.

Also, the communication applications of the invention aim to trigger the imagination of owners and create a unique bond between them. The exchange of information between friends is a greatly appealing aspect of the invention but this feature can also be attractive to other groups who wish to exchange business or other types of information.

The invention therefore establishes a form of wearable technology in which widespread consumer interest is likely, to the mutual benefit of banks, retailers and society as a whole.

In general, whilst claims have been formulated to the present invention, the teaching of the present application extends to any information contained herein, whether explicit or implicit and any generalisation thereof.

## Claims

1. Digital data storage apparatus (10) comprising:
attachment means (18) to removably attach the apparatus directly to the human body;
storage means (34, 36) for storing data; and
communication means (14, 16) for transferring data into and out of the apparatus;
characterised in that the storage means (34, 36) comprises one or more ports (34), each for connection to a discrete storage module (36) removably attachable to the apparatus (10) and in that the communication means (14, 16) includes contact means (14, 16) separate from the ports (34) and the storage means, the contact means (14, 16) being adapted to transfer data by physical contact with the apparatus (10).

2. The apparatus (10) of Claim 1 and having first contact means (16) adapted for direct data transfer contact with a functionally identical contact means (16) of another digital data storage apparatus.

3. The apparatus (10) of Claim 2, wherein the first contact means (16) comprises interlock formations (68, 70) co-operable with functionally identical interlock formations (68, 70) of the other apparatus to effect and maintain said data transfer contact.

4. The apparatus (10) of Claim 3, wherein the interlock formations (68, 70) are adapted to snap fit resiliently together when the respective contact means (16) are pushed together.

5. The apparatus (10) of any of Claims 2 to 4 and having second contact means (14) adapted for direct data transfer contact with a terminal (82) or interface (98).

6. The apparatus (10) of Claim 5, wherein the second contact means (14) comprises first and second conductors (14) exposed on a surface of the apparatus (10).

7. The apparatus (10) of Claim 6, wherein the conductors (14) are on opposed sides or edges of the apparatus (10).

8. The apparatus (10) of any preceding Claim, including means (44) for sensing the type of apparatus or data connected to the communication means (14, 16) and for selecting an appropriate one of the storage modules (36) for data transfer.

9. The apparatus (10) of any preceding Claim, wherein the storage means (34, 36) and the communication means (14, 16) are connected by means of a network.

10. The apparatus (10) of any preceding Claim, further characterised by activation means responsive to operation of the attachment means (18) when attaching the apparatus (10) to the human body.

11. The apparatus (10) of Claim 10, wherein the activation means is responsive to coupling of first and second conductive attachment parts (18).

12. The apparatus (10) of Claim 11, wherein the conductive attachment parts (18) are pads of conductive hook-and-eye material (18).

13. The apparatus (10) of any preceding Claim, wherein the storage modules (36) are iButtons (trade mark).

14. The apparatus (10) of any preceding Claim, further comprising a motion sensor (46).

15. The apparatus (10) of any preceding Claim, further comprising a temperature sensor (36).

16. The apparatus (10) of any preceding Claim, further comprising visual display means (20).

17. The apparatus (10) of Claim 16 when appendant to Claim 15, further comprising means (44) for providing or controlling a visual display in response to an output from the motion sensor (46).

18. The apparatus (10) of Claim 16 when appendant to Claim 16, further comprising means (44) for providing or controlling a visual display in response to an output from the temperature sensor (36).

19. The apparatus (10) of any of Claims 16 to 18, wherein the visual display means (20) indicates the status of data transfer by the communication means (14, 16).

20. The apparatus (10) of any preceding Claim, further comprising wireless communication means (62).

21. The apparatus (10) of Claim 20, further comprising means (44) for transmitting a message via the wireless communication means (62) and storing messages received via the wireless communication means (62).

22. The apparatus (10) of Claim 21, wherein the means (44) for transmitting a message via the wireless communication means (62) is denied access to certain data stored in the storage means.

23. The apparatus (10) of any preceding Claim, wherein the attachment means (18) comprise means to attach the apparatus around a limb of the human body.

24. The apparatus (10) of Claim 23, and taking the form of a bracelet (10) attachable to a wearer's wrist or forearm.

25. The apparatus (10) of Claim 24 when appendant to Claim 6 or Claim 7, wherein the first and second contacts (14) of the second contact means (14) extend substantially around the wearer's wrist or forearm and are spaced along the wearer's wrist or forearm.

26. The apparatus (10) of Claim 25 when appendant to Claim 7, wherein the first and second contacts (14) are on opposed long edges of the bracelet (10).

27. A public terminal (82) comprising input means (86, 88), display means (84) and communication means (92, 94, 96) for exchanging data by physical contact with a digital data storage apparatus (10) as claimed in any of Claims 1 to 26.

28. The public terminal (82) of Claim 27, wherein the communication means (92, 94, 96) is arranged to transfer electronic cash to the digital data storage apparatus (10).

29. The public terminal (82) of Claim 27 or Claim 28, and comprising an automatic teller machine.

30. An interface (98) for exchanging data between a digital data storage apparatus (10) and a personal computing device, comprising means (100) for connection to a personal computing device and communication means (92, 94, 96) for exchanging data by physical contact with a digital data storage apparatus (10) as claimed in any one of the claims 1 to 26.

31. The terminal of Claim 27 or the interface of Claim 30 and being adapted for use with the bracelet apparatus of Claim 25 or Claim 26, wherein the communication means of the terminal or the interface comprises a receptor (92) in which the wearer can position the bracelet, the receptor having first and second spaced conductors (94, 96) positioned to contact the first and second contacts (14) of the second contact means (14) when the bracelet (10) is so positioned.

32. The terminal or interface of Claim 31, further comprising a locating formation (102) for holding the first and second contacts (14) of the apparatus (10) in register with the conductors (94, 96).

33. The terminal or interface of Claim 32, wherein the locating formation (102) is situated between the first and second spaced conductors (94, 96).

34. The terminal or interface of Claim 32 or Claim 33, wherein the formation is a recess (102) adapted to receive a protruding part (16) of the apparatus (10)

35. The terminal or interface of Claim 34 when appendant to Claim 3, wherein the protruding part (16) is the first contact means (16).

36. The terminal or interface of Claim 34 or Claim 35, wherein the recess (102) is cylindrical or a transverse groove.
